# EUROPEAN PATENT APPLICATION

(11) **EP 4 826 793 A1**
(43) Date of publication of application: **21.10.2026**
(21) Application number: 25909610.5
(22) Date of filing: 24.03.2025
(51) Int. Cl.: H01M 4/525, H01M 4/505, H01M 4/485, H01M 10/0525

(54) **POSITIVE ELECTRODE MATERIAL AND PREPARATION METHOD THEREFOR, BATTERY AND ELECTRIC DEVICE**

(30) Priority: 28.02.2025 CN 202510240041
(71) Applicant: Beijing Easpring Material Technology Co., Ltd., Beijing 100160 (CN)
(72) Inventor: ZHAO, Tianmeng, Beijing 100160 (CN); ZHANG, Feng, Beijing 100160 (CN); ZHAO, Congfei, Beijing 100160 (CN); SONG, Shunlin, Beijing 100160 (CN); LIU, Yafei, Beijing 100160 (CN); CHEN, Yanbin, Beijing 100160 (CN)
(74) Representative: Nederlandsch Octrooibureau
(86) International application number: PCT/CN2025/084482
(87) International publication number: WO 2026/178947

(57) **Abstract**

The present disclosure relates to a cathode material and a method for preparing same, a battery, and an electrical device. The cathode material includes a composition represented by Formula (1): Li*ₐ*Ni*ₓ*Mn*_{y}*Co*_{z}*M_{1*b*}M_{2*c*}O₂ Formula (1), in which: 0.9≤*a*≤1.1, 0.5≤*x*<1, 0<*y*<0.5, *0<z<0.5,* 0≤*b*≤0.03, and 0≤c≤0.05; M₁ and M₂ each independently include at least one of Ba, Ra, Zr, Fe, Ca, Zn, B, W, Nb, Cd, Pb, Si, Mo, Cu, V, Ta, Cr, La, Al, Ce, Er, Ho, Y, Mg, Sr, or Ti; and a peak sub-grain size Xₚₑₐₖ of a 003 crystallographic plane of the cathode material and a peak sub-grain size Yₚₑₐₖ of a 104 crystallographic plane of the cathode material satisfy: 6≤Xₚₑₐₖ/Yₚₑₐₖ≤20. The cathode material has satisfactory rate capability, cycling performance, and safety performance, and is likely to exhibit a high capacity.

## Description

### PRIORITY INFORMATION

This application claims priority to and the benefit of Chinese Patent Application No. 2025102400416, filed with China National Intellectual Property Administration on February 28, 2025, the entire contents of which are incorporated herein by reference.

### FIELD

The present disclosure relates to the field of battery technologies, and in particular, to a cathode material and a method for preparing same, a battery, and an electrical device.

### BACKGROUND

With the continuous growth of electricity demand, lithium-ion batteries have been widely used in military and civilian fields due to their advantages such as high energy density, high battery voltage, wide operation temperature range, and long storage life. A cathode material is one of the most critical raw materials for lithium-ion batteries, and its performance directly affects an energy density, cycling performance, and safety performance of a battery. Currently, a ternary cathode material (such as a nickel-cobalt-manganese ternary material) has received much attention due to its high energy density, but its cycling performance and safety performance still need to be improved.

In the related art, the energy density of the ternary cathode material is usually achieved by increasing a nickel content, raising an operation voltage, and increasing a pallet density, while the cycling performance and the safety performance of the ternary cathode material are improved by coating, doping, and structural optimization. However, the cathode material in the related art still has some problems, which affect the cycling performance and the safety performance of the material. Therefore, the technology related to the cathode material still needs to be improved.

### SUMMARY

The present disclosure aims to solve at least one of the technical problems in the related art to some extent. To this end, the present disclosure provides a cathode material and a method for preparing same, a battery, and an electrical device. An energy density, cycling performance, and safety performance of the cathode material are improved by controlling a peak sub-grain size of cathode material particles.

In a first aspect, the present disclosure provides a cathode material. According to an embodiment of the present disclosure, the cathode material includes a composition represented by Formula (1): Li*ₐ*Ni*ₓ*Mn*_{y}*Co*_{z}*M_{1*b*}M_{2*c*}O₂ Formula (1), where: 0.9≤*a*≤1.1, 0.5≤*x*<1, 0<*y*<0.5, 0<*z*<0.5, 0≤*b*≤0.03, and 0≤c≤0.05; M₁ and M₂ each independently include at least one of Ba, Ra, Zr, Fe, Ca, Zn, B, W, Nb, Cd, Pb, Si, Mo, Cu, V, Ta, Cr, La, Al, Ce, Er, Ho, Y, Mg, Sr, or Ti; a peak sub-grain size Xₚₑₐₖ of a 003 crystallographic plane of the cathode material and a peak sub-grain size Yₚₑₐₖ of a 104 crystallographic plane of the cathode material satisfy: 6≤Xₚₑₐₖ/Yₚₑₐₖ≤20; the peak sub-grain size Xₚₑₐₖ refers to a sub-grain size corresponding to a peak of a sub-grain size volume distribution view of the 003 crystallographic plane, the sub-grain size volume distribution view of the 003 crystallographic plane being obtained from a powder X-ray diffraction pattern of the cathode material measured using Cu Kα radiation and calculated by Whole Powder Pattern Fitting (WPPF) refinement; and the peak sub-grain size Yₚₑₐₖ refers a sub-grain size corresponding to a peak of a sub-grain size volume distribution view of the 104 crystallographic plane, the sub-grain size volume distribution view of the 104 crystallographic plane being obtained from a powder X-ray diffraction pattern of the cathode material measured using Cu Kα radiation and calculated by the WPPF refinement.

The present disclosure discloses the sub-grain sizes corresponding to the peaks in the sub-grain size volume distribution view. That is, microscopic sub-grain structures of the cathode material having these sizes account for a largest proportion. In addition, when Xₚₑₐₖ/Yₚₑₐₖ satisfies the above range, a microscopic stress inside the cathode material is small, and a large internal space is available inside the cathode material, making an internal structure of the cathode material more stable and continuous, and achieving a larger interlayer spacing. Thus, intercalation and deintercalation of lithium ions are facilitated. Further, an intra-layer atomic arrangement of the cathode material is more compact, which enables a more stable structure of the cathode material, achieves satisfactory rate capability, cycling performance, and safety performance of the cathode material, and is likely to exhibit a high capacity.

According to an embodiment of the present disclosure, 7≤Xₚₑₐₖ/Yₚₑₐₖ≤15.

According to an embodiment of the present disclosure, Xₚₑₐₖ≥10,000 Å. Specifically, 10,000 Å≤Xₚₑₐₖ≤20,000 Å. The sub-grain size Xₚₑₐₖ of the 003 crystallographic plane satisfying the above range indicates that a Li interlayer spacing is large, which is beneficial for the intercalation and the deintercalation of the lithium ions. In addition, the intra-layer atomic arrangement is more compact, making a framework structure more stable. Further, the cycling performance and the safety performance of the cathode material are better.

According to an embodiment of the present disclosure, a sub-grain size distribution K90 of the 003 crystallographic plane of the cathode material satisfies: 0.4≤K90≤2.0. Specifically, 0.5≤K90≤1.4. K90=(X₉₀-X₁₀)/X₅₀. X₁₀, X₅₀, and X₉₀ refer to sub-grain sizes corresponding to sub-grain size distribution percentages of 10%, 50%, and 90% in the sub-grain size volume distribution view of the 003 crystallographic plane, respectively, the sub-grain size volume distribution view of the 003 crystallographic plane being obtained from the powder X-ray diffraction pattern of the cathode material measured using Cu Kα radiation and calculated by the WPPF refinement.

According to an embodiment of the present disclosure, an average particle size P50 of the cathode material ranges from 2.5 µm to 6.0 µm, specifically from 3.0 µm to 4.0 µm. The average particle size P50 of the cathode material is an average of caliper diameters of 500 particles of the cathode material that are randomly selected from a scanning electron microscopy image of the cathode material, the caliper diameter R being defined as an average of a length and a width of a minimum bounding rectangle of each particle of the cathode material.

According to an embodiment of the present disclosure, in the cathode material, a proportion of particles with the caliper diameter R smaller than 1 µm is less than or equal to 3%. Specifically, the proportion of the particles with the caliper diameter R smaller than 1 µm is less than or equal to 2%. The caliper diameter R is defined as the average of the length and the width of the minimum bounding rectangle of each particle of the cathode material.

According to an embodiment of the present disclosure, a microscopic stress of the cathode material is smaller than or equal to 0.08%, the microscopic stress being a percentage of lattice distortion of the entire sub-grain obtained from the powder X-ray diffraction pattern of the cathode material calculated by the WPPF refinement.

According to an embodiment of the present disclosure, M₁ includes at least one of Zr, Ca, Zn, B, W, Nb, Mo, La, Al, Ce, Mg, Sr, or Ti, and M₂ includes at least one of Zr, Ca, Zn, W, Nb, Cd, Pb, Si, Mo, Cr, La, Al, Ce, Er, Ho, Y, Mg, Sr, or Ti.

In a second aspect of the present disclosure, a method for preparing the cathode material described above is provided. According to an embodiment of the present disclosure, the method includes: mixing a precursor with a first lithium source, a second lithium source, and an optional M₁ source, to obtain a first mixture; performing a first sintering on the first mixture, to obtain an intermediate product; mixing the intermediate product with an optional M₂ source, to obtain a second mixture; and performing a second sintering on the second mixture, to obtain the cathode material. The first sintering includes: heating the first mixture to a temperature T1 within a duration t1 and holding for a duration t2; and then cooling down the first mixture to a temperature T2 and holding for a duration t3.

According to an embodiment of the present disclosure, the precursor is a nickel-cobalt-manganese ternary precursor. In some embodiments, the nickel-cobalt-manganese ternary precursor has a BET specific surface area greater than or equal to 20 m²/g.

According to an embodiment of the present disclosure, the first lithium source includes at least one of lithium carbonate or lithium oxide.

According to an embodiment of the present disclosure, in terms of molar ratio, an addition amount of the first lithium source satisfies 0.5≤[n(Li¹)]/[n(M')]≤1.0. In some embodiments, 0.65≤[n(Li¹)]/[n(M')]≤0.9.

According to an embodiment of the present disclosure, the second lithium source includes at least one of lithium hydroxide, lithium oxalate, or lithium acetate.

According to an embodiment of the present disclosure, in terms of molar ratio, an addition amount of the second lithium source satisfies 1.0≤[n(Li¹+Li²)]/[n(M')]≤1.1. In some embodiments, 1.01≤[n(Li¹+Li²)]/[n(M')]≤1.06.

In the present disclosure, n(Li¹) represents an amount of element lithium in the first lithium source, n(Li¹+Li²) represents a total amount of the element lithium in the first lithium source and the second lithium source, and n(M') represents a total amount of all metallic elements in the precursor.

According to an embodiment of the present disclosure, the M₁ source includes at least one of carbonates, hydroxides, oxides, or acetates of Zr, Ca, Zn, B, W, Nb, Mo, La, Al, Ce, Mg, Sr, and Ti.

According to an embodiment of the present disclosure, in terms of molar ratio, an addition amount of the M₁ source satisfies 0.0001≤[n(M₁)]/[n(M')]≤0.03. In some embodiments, 0.001≤[n(M₁)]/[n(M')]≤0.01. n(M₁) represents an amount of element M₁ in the M₁ source. n(M') represents a total amount of all metallic elements in the precursor.

According to an embodiment of the present disclosure, the first sintering satisfies at least one of the following conditions: t1 ranges from 1 hour to 6 hours; T1 ranges from 900°C to 1,300°C; t2 ranges from 5 hours to 10 hours; T2 ranges from 700°C to 1,270°C; t3 ranges from 2 hours to 8 hours; T2<T1; or a sintering atmosphere of the first sintering is air or oxygen.

According to an embodiment of the present disclosure, the M₂ source includes at least one of carbonates, hydroxides, oxides, or acetates of Zr, Ca, Zn, W, Nb, Cd, Pb, Si, Mo, Cr, La, Al, Ce, Er, Ho, Y, Mg, Sr, and Ti.

According to an embodiment of the present disclosure, in terms of molar ratio, an addition amount of the M₂ source satisfies 0<[n(M₂)]/[n(M')]≤0.05. In some embodiments, 0.001≤[n(M₂)]/[n(M'))]≤0.03. n(M₂) represents an amount of element M₂ in the M₂ source. n(M') represents a total amount of all metallic elements in the precursor.

According to an embodiment of the present disclosure, the second sintering satisfies at least one of the following conditions: a temperature of the second sintering ranges from 250°C to 1,270°C; a duration of the second sintering ranges from 5 hours to 20 hours; or a sintering atmosphere of the second sintering is air or oxygen.

In a third aspect of the present disclosure, a battery is provided. According to an embodiment of the present disclosure, the battery includes the cathode material described above. The battery has all the features and advantages of the cathode material described above, and thus details thereof will be omitted here.

In a third aspect of the present disclosure, an electrical device is provided. According to an embodiment of the present disclosure, the electrical device includes the battery described above. The electrical device has all the features and advantages of the battery described above, and thus details thereof will be omitted here.

### BRIEF DESCRIPTION OF THE DRAWINGS

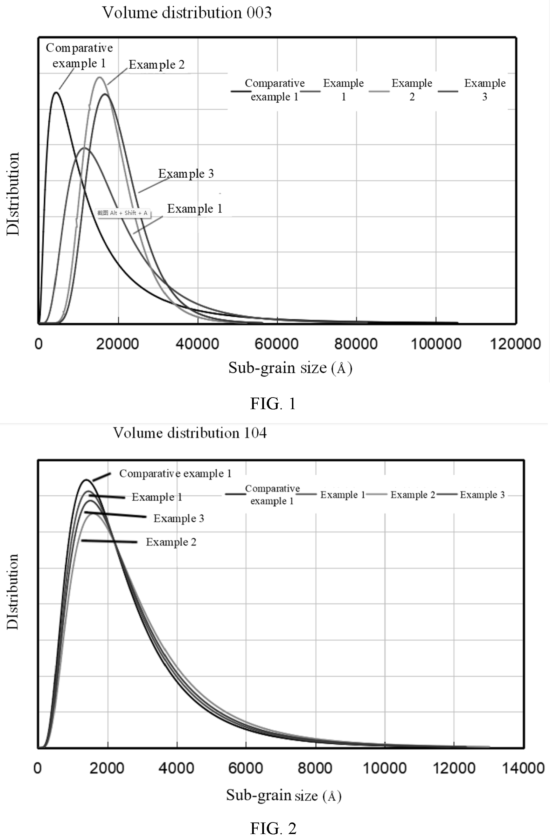

FIG. 1 is a sub-grain size volume distribution view of a 003 crystallographic plane of cathode materials in Example 1 to Example 3 and Comparative Example 1 of the present disclosure.
FIG. 2 is a sub-grain size volume distribution view of a 104 crystallographic plane of cathode materials in Example 1 to Example 3 and Comparative Example 1 of the present disclosure.

### DETAILED DESCRIPTION

Embodiments of the present disclosure will be described in detail below with reference to examples thereof as illustrated in the accompanying drawings. The embodiments described below with reference to the drawings are illustrative only, and are intended to explain, rather than limit, the present disclosure.

In a first aspect, the present disclosure provides a cathode material. According to an embodiment of the present disclosure, the cathode material includes a composition represented by Formula (1):

Li*ₐ*Ni*ₓ*Mn*_{y}*Co*_{z}*M_{1*b*}M_{2*c*}O₂ Formula (1),

in which: 0.9≤*a*≤1.1, 0.5≤*x*<1, 0<*y*<0.5, 0<*z*<0.5, 0≤*b*≤0.03, and 0≤c≤0.05; M₁ and M₂ each independently include at least one of Ba, Ra, Zr, Fe, Ca, Zn, B, W, Nb, Cd, Pb, Si, Mo, Cu, V, Ta, Cr, La, Al, Ce, Er, Ho, Y, Mg, Sr, or Ti; a peak sub-grain size Xₚₑₐₖ of a 003 crystallographic plane of the cathode material and a peak sub-grain size Yₚₑₐₖ of a 104 crystallographic plane of the cathode material satisfy: 6≤Xₚₑₐₖ/Yₚₑₐₖ≤20. The peak sub-grain size Xₚₑₐₖ refers to a sub-grain size corresponding to a peak of a sub-grain size volume distribution view of the 003 crystallographic plane, the sub-grain size volume distribution view of the 003 crystallographic plane being obtained from a powder X-ray diffraction pattern of the cathode material measured using Cu Kα radiation and calculated by Whole Powder Pattern Fitting (WPPF) refinement. The peak sub-grain size Yₚₑₐₖ refers a sub-grain size corresponding to a peak of a sub-grain size volume distribution view of the 104 crystallographic plane, the sub-grain size volume distribution view of the 104 crystallographic plane being obtained from a powder X-ray diffraction pattern of the cathode material measured using Cu Kα radiation and calculated by the WPPF refinement.

In the present disclosure, by controlling Xₚₑₐₖ/Yₚₑₐₖ to satisfy the above range, a microscopic stress inside the cathode material is small, and a large internal space is available inside the cathode material, making an internal structure of the cathode material more stable and continuous, and achieving a large interlayer spacing. Thus, intercalation and deintercalation of lithium ions are facilitated. Further, an intra-layer atomic arrangement of the cathode material is more compact, which enables a more stable structure of the cathode material, achieves satisfactory rate capability, cycling performance, and safety performance of the cathode material, and is likely to exhibit a high capacity.

As a preferred embodiment of the present disclosure, the cathode material is a single-crystal cathode material. Xₚₑₐₖ/Yₚₑₐₖ satisfying the above range indicates that, in a microstructure of the cathode material, the 003 crystallographic plane of sub-grains grows advantageously compared with the 104 crystallographic plane of the sub-grains, which leads to an increase in an interlayer spacing in a Z-axis direction of a unit cell, without significantly changing a body diagonal direction of the unit cell. Thus, the obtained single-crystal cathode material has a larger particle size, a more stable framework, and more satisfactory material stability and safety.

According to an embodiment of the present disclosure, 7≤Xₚₑₐₖ/Yₚₑₐₖ≤15. As an example, specifically, Xₚₑₐₖ/Yₚₑₐₖ may be 6, 7, 8, 9, 10, 11, 12, 13, 14, 15, 16, 17, 18, 19, or 20. Thus, service performance of the cathode material can be further improved.

According to an embodiment of the present disclosure, M₁ includes at least one of Zr, Ca, Zn, B, W, Nb, Mo, La, Al, Ce, Mg, Sr, or Ti, and M₂ includes at least one of Zr, Ca, Zn, W, Nb, Cd, Pb, Si, Mo, Cr, La, Al, Ce, Er, Ho, Y, Mg, Sr, or Ti. Thus, the cycling performance and the safety performance of the cathode material can be further improved.

According to some embodiments of the present disclosure, M₂ is a coating element. A concentration of M₂ on a surface of cathode material particles is greater than that inside the particles. M₂ is mainly distributed on the surface of the particles.

According to an embodiment of the present disclosure, Xₚₑₐₖ≥10,000 Å. Specifically, 10,000 Å≤Xₚₑₐₖ≤20,000 Å. The sub-grain size Xₚₑₐₖ of the 003 crystallographic plane satisfying the above range indicates that a Li interlayer spacing is large, which is beneficial for the intercalation and the deintercalation of the lithium ions. In addition, the intra-layer atomic arrangement is more compact, making a framework structure more stable. Further, the cycling performance and the safety performance of the cathode material are better.

As an example, Xₚₑₐₖ may specifically be 10,000Å, 11,000Å, 12,000Å, 13,000Å, 14,000Å, 5,000Å, 16,000Å, 17,000Å, 18,000Å, or 20,000Å.

According to an embodiment of the present disclosure, a sub-grain size distribution K90 of the 003 crystallographic plane of the cathode material satisfies: 0.4≤K90≤2.0. Specifically, the sub-grain size distribution K90 may satisfy: 0.5≤K90≤1.4, where K90=(X₉₀-X₁₀)/X₅₀.

X₁₀ refers to a sub-grain size corresponding to a sub-grain size distribution percentage of 10% in a sub-grain size volume distribution view of the 003 crystallographic plane. The sub-grain size volume distribution view of the 003 crystallographic plane being obtained from the powder X-ray diffraction pattern of the cathode material measured using Cu Kα radiation and calculated by the WPPF refinement.

X₅₀ refers to a sub-grain size corresponding to a sub-grain size distribution percentage of 50% in a sub-grain size volume distribution view of the 003 crystallographic plane. The sub-grain size volume distribution view of the 003 crystallographic plane being obtained from the powder X-ray diffraction pattern of the cathode material measured using Cu Kα radiation and calculated by the WPPF refinement.

X₉₀ refers to a sub-grain size corresponding to a sub-grain size distribution percentage of 90% in a sub-grain size volume distribution view of the 003 crystallographic plane. The sub-grain size volume distribution view of the 003 crystallographic plane being obtained from the powder X-ray diffraction pattern of the cathode material measured using Cu Kα radiation and calculated by the WPPF refinement.

Satisfying the above sub-grain size distribution indicates that, the sub-grain size of the 003 crystallographic plane of the cathode material is uniform, the cathode material exhibits a uniform internal structure, the microscopic stress is released, the interlayer spacing is large, and the intra-layer atomic arrangement is more regular. Thus, the cathode material has satisfactory rate capability, cycling performance, and safety performance, and is likely to exhibit a high capacity.

As an example, K90 of the cathode material may specifically be 0.4, 0.5, 0.6, 0.7, 0.8, 0.9, 1.0, 1.1, 1.2, 1.3, 1.4, 1.5, 1.6, 1.7, 1.8, 1.9, or 2.0.

According to an embodiment of the present disclosure, an average particle size P50 of the cathode material ranges from 2.5 µm to 6.0 µm, specifically from 3.0 µm to 4.0 µm. The average particle size P50 of the cathode material is an average of caliper diameters of 500 particles of the cathode material that are randomly selected from a scanning electron microscopy image of the cathode material. The caliper diameter R is defined as an average of a length and a width of the minimum bounding rectangle of each particle of the cathode material. The cathode material having the above average particle size is beneficial to structural stability of the cathode material, and improves the cycling performance and safety of the battery. In addition, when the cathode material is used for an electrode plate of the battery, the electrode plate of the battery has a high pallet density, which is beneficial to improving a volumetric energy density of the battery.

As an example, the average particle size P50 of the cathode material may specifically be 2.5 µm, 3 µm, 3.5 µm, 4 µm, 4.5 µm, 5 µm, 5.5 µm, or 6.0 µm.

According to an embodiment of the present disclosure, in the cathode material, a proportion of particles with a caliper diameter R smaller than 1 µm is less than or equal to 3%. Specifically, the proportion of the particles with the caliper diameter R smaller than 1 µm may be less than or equal to 2%. A small proportion of small particles is beneficial to the structural stability of the cathode material, and improves the cycling performance and the safety of the battery. In addition, when the cathode material is used for the electrode plate of the battery, the electrode plate of the battery has the high pallet density, which is beneficial to improving the volumetric energy density of the battery.

As an example, the proportion of the particles with the caliper diameter R smaller than 1 µm may specifically be 3%, 2.5%, 2%, 1.5%, 1%, or 0.5%.

In the present disclosure, the caliper diameter of more than 500 cathode material particles can be measured through a scanning electron microscope photograph of the cathode material, and then the proportion of the particles with the caliper diameter R smaller than 1 µm is calculated.

According to an embodiment of the present disclosure, a microscopic stress of the cathode material is smaller than or equal to 0.08%. The microscopic stress is a percentage of lattice distortion of the entire sub-grain obtained from the powder X-ray diffraction pattern of the cathode material calculated by the WPPF refinement. Thus, the structural stability of the cathode material is better, which is conducive to improving the cycling performance and the safety performance of the battery.

As an example, the microscopic stress of the cathode material may specifically be 0.08%, 0.07%, 0.06%, 0.05%, 0.04%, 0.03%, 0.02%, or 0.01%.

In a second aspect, the present disclosure provides a method for preparing the above cathode material. According to an embodiment of the present disclosure, the method includes the following steps.

In S1, a precursor is mixed with a first lithium source, a second lithium source, and an optional M₁ source, to obtain a first mixture.

According to an embodiment of the present disclosure, in this step, a specific manner of mixing the precursor with the first lithium source, the second lithium source, and the optional M₁ source is not particularly limited. The precursor, the first lithium source, the second lithium source, and the optional M₁ source may be weighed separately and then directly mixed. For example, the weighed precursor, first lithium source, second lithium source, and optional M₁ source may be added to a high-speed mixer for mixing. According to actual needs, the precursor, the first lithium source, the second lithium source, and the optional M₁ source may also be mixed in a predetermined feeding sequence, which can be specifically adjusted and selected as desired. The present disclosure is not particularly limited to any of these examples.

In this step, the optional M₁ source means that the first mixture may contain the M₁ source or may not contain the M₁ source. Whether to add the M₁ source can be selected as desired.

According to an embodiment of the present disclosure, the M₁ source includes at least one of carbonates, hydroxides, oxides, or acetates of Zr, Ca, Zn, B, W, Nb, Mo, La, Al, Ce, Mg, Sr, and Ti. Thus, the element M₁ is mainly doped into a crystal structure of the cathode material, which can further improve the structural stability of the cathode material.

According to an embodiment of the present disclosure, in terms of molar ratio, an addition amount of the M₁ source satisfies 0.0001≤n(M₁)/n(M')≤0.03. Specifically, in terms of molar ratio, the addition amount of the M₁ source may satisfy 0.001≤n(M₁)/n(M')≤0.01. Satisfying the above addition amount can improve the structural stability of the cathode material while substantially bringing no other negative effects.

As an example, in terms of molar ratio, n(M₁)/n(M') may specifically be 0.0001, 0.0005, 0.001, 0.005, 0.01, 0.02, or 0.03.

In the present disclosure, n(M₁) represents an amount of element M₁ in the M₁ source, and n(M') represents a total amount of all metallic elements in the precursor.

According to an embodiment of the present disclosure, the precursor is a nickel-cobalt-manganese ternary precursor. Thus, the cathode material has a high capacity. In some embodiments, the nickel-cobalt-manganese ternary precursor may be a nickel-cobalt-manganese hydroxide, a nickel-cobalt-manganese oxide, a nickel-cobalt-manganese oxyhydroxide, or the like. As an example, a chemical formula of the nickel-cobalt-manganese hydroxide may be Niₓ₁Mn_{y1}Co_{z1}(OH)₂, where 0.5≤x1<1, 0<y1<0.5, and 0<z1<0.5.

According to an embodiment of the present disclosure, a BET specific surface area of the nickel-cobalt-manganese ternary precursor is greater than or equal to 20 m²/g, specifically such as 20 m²/g, 21 m²/g, 22 m²/g, 23 m²/g, 24 m²/g, 25 m²/g, 26 m²/g, 27 m²/g, 8 m²/g, 29 m²/g, 30 m²/g, etc. The precursor having the above specific surface area allows the cathode material to grow rapidly and have a uniform particle size.

According to an embodiment of the present disclosure, the first lithium source includes at least one of lithium carbonate or lithium oxide.

According to an embodiment of the present disclosure, in terms of molar ratio, an addition amount of the first lithium source satisfies 0.65≤[n(Li¹)]/[n(M')]≤1.0. Specifically, in terms of molar ratio, the addition amount of the first lithium source may satisfy 0.5≤[n(Li¹)]/[n(M')]≤0.9. As an example, specifically, n(Li¹)]/[n(M') may be 0.65, 0.7, 0.75, 0.8, 0.85, 0.9, 0.95, or 1.0.

According to an embodiment of the present disclosure, the second lithium source includes at least one of lithium hydroxide, lithium oxalate, or lithium acetate.

According to an embodiment of the present disclosure, in terms of molar ratio, an addition amount of the second lithium source satisfies 1.0≤[n(Li¹+Li²)]/[n(M')]≤1.1. Specifically, in terms of molar ratio, the addition amount of the second lithium source may satisfy 1.01≤[n(Li¹+Li²)]/[n(M')]≤1.06. As an example, specifically, n(Li¹+Li²)/n(M') may be 1.0, 1.01, 1.02, 1.03, 1.04, 1.05, 1.06, 1.07, 1.08, 1.09, or 1.1.

In the present disclosure, n(Li¹) represents an amount of element lithium in the first lithium source, n(Li¹+Li²) represents a total amount of the element lithium in the first lithium source and the second lithium source, and n(M') represents a total amount of all metallic elements in the precursor.

In the method for preparing the cathode material of the present disclosure, two kinds of lithium sources are mixed for the first sintering. The second lithium source has relatively high activity and can rapidly enter an inside of the precursor to carry out a lithiation reaction, allowing the precursor to react from the inside out. The first lithium source has relatively low activity, reacts first on a surface of the precursor, and gradually permeates into the inside of the precursor, reacting from the outside in. Using the two kinds of lithium sources mixed for the first sintering allows the precursor to react both inside and outside. In this way, lithium is distributed more uniformly within the structure of the cathode material and rapidly occupies suitable lattice positions, reducing lithium-nickel disorder and an internal stress.

The above usage ranges of the first lithium source and the second lithium source also result in a higher degree of coordination between reactions inside and outside the precursor, which further facilitates a uniform distribution of lithium in the structure of the cathode material, improving the service performance of the cathode material.

In S2, a first sintering is performed on the first mixture, to obtain an intermediate product.

In this step, the first sintering may include: heating the first mixture to a temperature T1 within a duration t1 and holding for a duration t2; and then cooling down the first mixture to a temperature T2 and holding for a duration t3. Specifically, a heating stage of heating the first mixture to the temperature T1 is mainly a lithiation process, mainly for the reaction of the precursor with the first lithium source and the second lithium source to generate lithium compounds. A holding stage at the temperature T1 is mainly a crystal growth stage. A stage of cooling down to the temperature T2 and holding is mainly an internal structure reorganization process of the cathode material. In this stage, the cathode material exhibits the uniform internal structure, the microscopic stress is released, and sufficient time is available for an adjustment of a structure of the unit cell. Thus, the interlayer spacing is increased, and the intra-layer atomic arrangement becomes more regular, which is beneficial for an internal preferred orientation.

According to an embodiment of the present disclosure, the first sintering satisfies at least one of the following conditions: t1 ranges from 1 hour to 6 hours; T1 ranges from 900°C to 1,300°C; t2 ranges from 5 hours to 10 hours; T2 ranges from 700°C to 1,270°C; t3 ranges from 2 h to 8 h; T2<T1; or a sintering atmosphere of the first sintering is air or oxygen.

As an example, specifically, t1 may be 1 hour, 2 hours, 3 hours, 4 hours, 5 hours, or 6 hours; T1 may be 900°C, 950°C, 1,000°C, 1,050°C, 1,100°C, 1,150°C, 1,200°C, 1,250°C, or 1,300°C; t2 may be 5 hours, 6 hours, 7 hours, 8 hours, 9 hours, or 10 hours; T2 may be 700°C, 750°C, 800°C, 850°C, 900°C, 950°C, or 1,000°C; t3 may be 2 hours, 3 hours, 4 hours, 5 hours, 6 hours, 7 hours, or 8 hours. Within the above duration and temperature ranges, the sintering duration is short and the sintering temperature is high, allowing the cathode material to grow rapidly and have the uniform particle size. In addition, the obtained cathode material has a uniformly arranged internal structure, a small microscopic stress, a large interlayer spacing, and a more regular intra-layer atomic arrangement, resulting in better comprehensive service performance.

According to an embodiment of the present disclosure, the method may further include performing, after the first sintering is completed, a dissociation on a first sintered product, to obtain the intermediate product. Specifically, the dissociation may be performed with reference to conventional techniques in the art, such as crushing and sieving. The present disclosure is not particularly limited to any of these examples.

In S3, the intermediate product is mixed with an optional M₂ source, to obtain a second mixture.

In this step, a specific manner of mixing the intermediate product with the M₂ source is also not particularly limited. In some embodiments, the intermediate product and the M₂ source may be weighed in accordance with expected amounts and added to the high-speed mixer for mixing.

In this step, the optional M₂ source means that the second mixture may contain the M₂ source or may not contain the M₂ source. Whether to add the M₂ source can be selected as desired.

According to an embodiment of the present disclosure, the M₂ source includes at least one of carbonates, hydroxides, oxides, or acetates of Zr, Ca, Zn, W, Nb, Cd, Pb, Si, Mo, Cr, La, Al, Ce, Er, Ho, Y, Mg, Sr, and Ti. Thus, the element M₂ is mainly coated on the surface of the cathode material, which can reduce side reactions and improve the cycling performance of the battery using the cathode material.

According to an embodiment of the present disclosure, in terms of molar ratio, an addition amount of the M₂ source satisfies 0<n(M₂)/n(M')≤0.05. Specifically, in terms of molar ratio, the addition amount of the M₂ source may satisfy 0.001≤n(M₂)/n(M')≤0.03. Satisfying the above addition amount can improve the cycling performance of the battery using the cathode material while substantially bringing no other negative effects.

As an example, specifically, in terms of molar ratio, n(M₂)/n(M') may be 0.0001, 0.0005, 0.001, 0.005, 0.01, 0.02, 0.03, 0.04, or 0.05.

n(M₂) represents an amount of element M₂ in the M₂ source. n(M') represents a total amount of all metallic elements in the precursor.

In S4, a second sintering is performed on the second mixture, to obtain the cathode material.

According to an embodiment of the present disclosure, a temperature of the second sintering ranges from 250°C to 1,270°C, specifically such as 250°C, 300°C, 350°C, 400°C, 450°C, 500°C, 550°C, 600°C, 650°C, 700°C, 750°C, 800°C, 850°C, 900°C, 950°C, 1,000°C, 1,050°C, 1,100°C, 1,150°C, 1,200°C, and 1250°C.

According to an embodiment of the present disclosure, a duration of the second sintering ranges from 5 hours to 20 hours, specifically such as 5 hours, 6 hours, 7 hours, 8 hours, 9 hours, 10 hours, 11 hours, 12 hours, 13 hours, 14 hours, 15 hours, 16 hours, 17 hours, 18 hours, 19 hours, and 20 hours.

According to an embodiment of the present disclosure, a sintering atmosphere of the second sintering is air or oxygen.

When the above sintering conditions are satisfied, the structural stability, the capacity, etc., of the cathode material can be improved, improving the comprehensive service performance of the cathode material.

In a third aspect, the present disclosure provides a battery. According to an embodiment of the present disclosure, the battery includes the cathode material described above. The battery possesses both a high energy density and satisfactory cycling performance.

It should be understood that, a specific type of the battery is not particularly limited. The battery includes, but is not limited to, a lithium-ion battery, a lithium metal battery, and the like. A specific structure of the battery may refer to conventional techniques, and the present disclosure imposes no particular limitation thereon. As an example, for the lithium-ion battery, it typically includes an outer package and an electrode assembly and an electrolyte (including a solid-state electrolyte, a gel electrolyte, an electrolyte solution, etc.) that are accommodated within the outer package. The electrode assembly typically includes a cathode plate, an anode plate, and a separator located between the cathode plate and the anode plate, and is prepared by a lamination process or a winding process. The cathode plate may include a cathode current collector and a cathode film layer located on at least one surface of the cathode current collector. The cathode film layer contains the above cathode active material, a cathode binder, and a cathode conductive agent. The anode plate may include an anode current collector and an anode film layer located on at least one surface of the anode current collector. The anode film layer contains an anode active material (a carbon-based active material, a silicon-based active material, etc.), an anode binder, and an anode conductive agent.

In a fourth aspect of the present disclosure provides, an electrical device is provided. According to an embodiment of the present disclosure, the electrical device includes the battery described above. The electrical device has all the features and advantages of the battery described above, and thus details thereof will be omitted here.

According to an embodiment of the present disclosure, the battery may serve as a power source or an energy storage unit for the electrical device. The electrical device may include a mobile component (e.g., a mobile phone and a laptop computer), an electric vehicle (e.g., a pure electric vehicle, a hybrid electric vehicle, a plug-in hybrid electric vehicle, an electric bicycle, an electric scooter, an electric golf cart, and an electric truck), an electric train, a ship, a satellite, an energy storage system, and the like, but is not limited thereto.

Examples of the present disclosure are described in detail below.

### Example 1

In S1, a hydroxide precursor P1 with a nickel-cobalt-manganese molar ratio of 6:3:1, lithium carbonate, lithium hydroxide, and lanthanum oxide were uniformly mixed in a high-speed mixer in a ratio of [n(Ni)+n(Co)+n(Mn)]:n(Li¹):n(Li²):n(La)=1:0.65:0.41:0.008, to obtain a mixture I.

In S2, under an oxygen atmosphere, the mixture I was heated to 1,000°C over 5 hours, held at 1,000°C for 8 hours, and then cooled down to 800°C, with the cooling and holding taking a total of 5 hours. Then, the mixture I was crushed and sieved to obtain a cathode material in-process product.

In S3, the cathode material in-process product II and zirconium oxide were uniformly mixed in the high-speed mixer in a ratio of [n(Ni)+n(Co)+n(Mn)]:n(Zr)=1:0.001, to obtain a mixture II.

In S4, under an air atmosphere, the mixture II was subjected to a second sintering at a high temperature of 600°C for 5 hours, naturally cooled to a room temperature, and then crushed and sieved, to obtain a single-crystal cathode material A1. A composition of the single-crystal cathode material A1 was Li_{1.06}(Ni_{0.6}Co_{0.3}Mn_{0.1}La_{0.008})Zr_{0.001}O₂.

### Example 2 to Example 9

Same as Example 1, with specific differences shown in Table 1.

### Comparative Example 1

In S1, a hydroxide precursor P1 with a nickel-cobalt-manganese molar ratio of 6:3:1, lithium carbonate, lithium hydroxide, and magnesium oxide were uniformly mixed in the high-speed mixer in a ratio of [n(Ni)+n(Co)+n(Mn)]:n(Li¹):n(Li²):n(Mg) =1:0.8:0.25:0.002, to obtain a mixture I.

In S2, under an oxygen atmosphere, the mixture I was heated to 880°C over 4 hours, held at 880°C for 8 hours, naturally cooled to a room temperature, and then crushed and sieved, to obtain a cathode material in-process product.

In S3, the cathode material in-process product II and aluminum oxide were uniformly mixed in the high-speed mixer in a ratio of [n(Ni)+n(Co)+n(Mn)]:n(Al)=1:0.005, to obtain a mixture II.

In S4, under an air atmosphere, the mixture II was subjected to a second sintering at a high temperature of 700°C for 8 hours, naturally cooled to the room temperature, and then crushed and sieved, to obtain a single-crystal cathode material B1.

### Comparative Example 2

In S1, a hydroxide precursor P1 with a nickel-cobalt-manganese molar ratio of 6:3:1, lithium carbonate, lithium hydroxide, and magnesium oxide were uniformly mixed in the high-speed mixer in a ratio of [n(Ni)+n(Co)+n(Mn)]:n(Li¹):n(Li²):n(Mg) =1:0.8:0.25:0.002, to obtain a mixture I.

In S2, under an oxygen atmosphere, the mixture I was heated to 1,050°C over 6 hours, held at 1,050°C for 10 hours, naturally cooled to a room temperature, and then crushed and sieved, to obtain a cathode material in-process product.

In S3, the cathode material in-process product II and aluminum oxide were uniformly mixed in the high-speed mixer in a ratio of [n(Ni)+n(Co)+n(Mn)]:n(Al)=1:0.005, to obtain a mixture II.

In S4, under an air atmosphere, the mixture II was subjected to a second sintering at a high temperature of 800°C for 8 hours, naturally cooled to the room temperature, and then crushed and sieved, to obtain a single-crystal cathode material B2.

**Table 1: Preparation parameters**

| | Example 1 | Example 2 | Example 3 | Example 4 | Example 5 | Example 6 |
|---|---|---|---|---|---|---|
| Precursor nickel-cobalt-man ganese molar ratio | 6:3:1 | 6:3:1 | 6:3:1 | 6:3:1 | 6:3:1 | 6:3:1 |
| n(Li¹)/n(M') | 0.65 | 0.8 | 0.8 | 0.8 | 0.8 | 0.8 |
| n(Li²)/n(M') | 0.41 | 0.24 | 0.25 | 0.25 | 0.25 | 0.25 |
| n(Li¹+Li²) :n(M') | 1.06 | 1.04 | 1.05 | 1.05 | 1.05 | 1.05 |
| M₁ source | La₂O₃ | TiO₂ | MgO | MgO | MgO | MgO |
| n(M₁):n(M') | 0.008 | 0.005 | 0.002 | 0.002 | 0.002 | 0.002 |
| t1/hour | 5 | 5 | 5 | 5 | 5 | 2 |
| T1/°C | 1000 | 1010 | 1020 | 1020 | 1020 | 960 |
| t2/hour | 8 | 8 | 8 | 8 | 8 | 5 |
| T2/°C | 800 | 900 | 900 | 700 | 1020 | 900 |
| t3/hour | 5 | 5.5 | 6 | 2 | 8 | 6 |
| M₂ source | ZrO₂ | Nb₂O₅ | Al₂O₃ | Al₂O₃ | Al₂O₃ | Al₂O₃ |
| n(M₂):n(M') | 0.001 | 0.01 | 0.005 | 0.005 | 0.005 | 0.005 |
| Second sintering temperature/°C | 600 | 700 | 800 | 800 | 800 | 800 |
| Second sintering duration/hour | 5 | 15 | 8 | 8 | 8 | 8 |
| Cathode material chemical formula | Li_{1.06}(Ni_{0.6}C o_{0.3}Mn_{0.1}La_{0 .008})Zr_{0.001O2} | Li_{1.04}(Ni_{0.6}C o_{0.3}Mn_{0.1}Ti_{0. 005})Nb_{0.01O2} | Li_{1.05}(Ni_{0.6} Co_{0.3}Mn_{0.1} Mg_{0.002})Al _{0.005O2} | Li_{1.05}(Ni_{0.6}Co _{0.3}Mn_{0.1}Mg_{0.0 02})Al_{0.005O2} | Li_{1.05}(Ni_{0.6}Co _{0.3}Mn_{0.1}Mg_{0.0 02})Al_{0.005O2} | Li_{1.05}(Ni_{0.6} Co_{0.3}Mn_{0.1} Mg_{0.002})Al_{0. 005O2} |

| | Example 7 | Example 8 | Example 9 | Comparative Example 1 | Comparative Example 2 | |
|---|---|---|---|---|---|---|
| Precursor nickel-cobalt-man ganese molar ratio | 6:3:1 | 6:3:1 | 8:01:01 | 6:3:1 | 6:3:1 | |
| n(Li¹)/n(M') | 0.8 | 0.8 | 0.8 | 0.8 | 0.8 | |
| n(Li²)/n(M') | 0.25 | 0.25 | 0.23 | 0.25 | 0.25 | |
| n(Li¹+Li²) :n(M') | 1.05 | 1.05 | 1.03 | 1.05 | 1.05 | |
| M₁ source | MgO | MgO | H₃BO₃ | MgO | MgO | |
| n(M₁):n(M') | 0.002 | 0.002 | 0.01 | 0.002 | 0.002 | |
| t1/hour | 6 | 4 | 5 | 4 | 6 | |
| T1/°C | 1300 | 1200 | 870 | 880 | 1050 | |
| t2/hour | 10 | 7 | 8 | 8 | 10 | |
| T2/°C | 900 | 900 | 800 | / | / | |
| t3/hour | 6 | 6 | 5 | / | / | |
| M₂ source | Al₂O₃ | Al₂O₃ | Y₂O₃ | Al₂O₃ | Al₂O₃ | |
| n(M₂):n(M') | 0.005 | 0.005 | 0.03 | 0.005 | 0.005 | |
| Second sintering temperature/°C | 800 | 800 | 600 | 700 | 800 | |
| Second sintering duration/hour | 8 | 8 | 20 | 8 | 8 | |
| Cathode material chemical formula | Li_{1.05}(Ni_{0.6}C o_{0.3}Mn_{0.1}Mg _{0.002})Al_{0.005O 2} | Li_{1.05}(Ni_{0.6}C o_{0.3}Mn_{0.1}Mg _{0.002})Al_{0.005O 2} | Li_{1.03}(Ni_{0.8} Co_{0.1}Mn_{0.1} B_{0.01})Y_{0.03 O2} | Li_{1.05}(Ni_{0.6}Co _{0.3}Mn_{0.1}Mg_{0.0 02})Al_{0.005O2} | Li_{1.05}(Ni_{0.6}Co _{0.3}Mn_{0.1}Mg_{0.0 02})Al_{0.005O2} | |

### Performance test:

(1) Sub-grain size and microscopic stress: the sub-grain size volume distribution view of the 003 crystallographic plane and the 104 crystallographic plane was obtained from a powder X-ray diffraction pattern measured using Cu Kα radiation and calculated by the WPPF refinement. Xₚₑₐₖ, Yₚₑₐₖ, X₁₀, X₅₀, and X₉₀ were obtained based on the curve sub-grain size volume distribution view. The microscopic stress was the percentage of lattice distortion of the entire sub-grain obtained from the powder X-ray diffraction pattern of the cathode material calculated by the WPPF refinement.
(2) Average particle size P50, and proportion of particles with the caliper diameter R smaller than 1 µm: 500 cathode material particles were randomly selected from the scanning electron microscope photograph of the cathode material. The length and the width of the minimum bounding rectangle of each of the 500 cathode material particles were measured. The caliper diameter (the average of the length and the width of the minimum bounding rectangle) of each of the 500 cathode material particle was calculated. Then, an average of the caliper diameters of all particles (i.e., the average particle size P50) and the proportion of the particles with the caliper diameter R smaller than 1 µm were calculated.
(3) Morphology and surface roughness test: scanning electron microscope, model ERA-9200 from ELIONIX, Japan.
(4) Specific surface area test: specific surface area meter, model Tristar 3020 from Micromeritics.
(5) Electrochemical performance test:

The electrochemical performance of the cathode material prepared in each Example and Comparative example was tested using a 2025-type coin cell.

A preparation process of the 2025-type coin cell was specifically as follows.

Plate preparation: the cathode material, acetylene black, and polyvinylidene fluoride (PVDF) were fully mixed in a mass ratio of 95:3:2 with an appropriate amount of N-methylpyrrolidone (NMP) to form a uniform slurry. The slurry was coated on an aluminum foil, dried at 120°C for 12 hours, and then stamped into shape under a pressure of 100 MPa to prepare a cathode plate having a diameter of 12 mm and a thickness of 120 µm. A loading amount of the cathode material ranged from 15 mg/cm² to 16 mg/cm².

Battery assembly: in an argon-filled glove box having both a water content and an oxygen content less than 5 ppm, the cathode plate, a separator, an anode plate, and an electrolyte solution were assembled into a 2025-type coin cell, which was then left to stand for 6 hours. The anode plate was a metallic lithium sheet having a diameter of 17 mm and a thickness of 1 mm. The separator was a polyethylene porous membrane (Celgard 2325) having a thickness of 25 µm. The electrolyte solution was an equal liquid mixture of ethylene carbonate (EC) and diethyl carbonate (DEC) containing 1 mol/L LiPF₆.

The electrochemical performance of the 2025-type coin cell was tested using a Shenzhen Neware battery testing system. A charge-discharge current density of 0.1 C was 200 mA/g.

First specific charge-discharge capacity and first charge-discharge efficiency: a charge-discharge voltage was controlled to range from 3.0 V to 4.45 V. At a room temperature, a charge-discharge test was performed on the coin cell at 0.1 C to evaluate the first specific charge-discharge capacity and the first charge-discharge efficiency of the cathode material.

Cycling performance test: the charge-discharge voltage was controlled to range from 3.0 V to 4.45 V. At a constant temperature of 45°C, the coin cell was charged and discharged at 0.1 C for 2 cycles, and then charged and discharged at 1 C for 80 cycles, to evaluate a high-temperature capacity retention rate of the cathode material.

Rate capability test: the charge-discharge voltage was controlled to range from 3.0 V to 4.45 V. At the room temperature, the coin cell was charged and discharged at 0.1 C for 2 cycles, and then charged and discharged at each of 0.2 C, 0.33 C, 0.5 C, and 1 C for 1 cycle. The rate capability of the cathode material was evaluated by a ratio of a first specific discharge capacity at 0.1 C to a specific discharge capacity at 1 C. The first specific discharge capacity at 0.1 C was a specific discharge capacity of the coin cell in a 1-st cycle. The specific discharge capacity at 1 C was a specific discharge capacity of the coin cell in a 6-th cycle.

**Table 2: Test result**

| | Example 1 | Example 2 | Example 3 | Example 4 | Example 5 | Example 6 |
|---|---|---|---|---|---|---|
| Average particle size P50/µm | 2.7 | 3.1 | 3.4 | 3.4 | 3.4 | 2.3 |
| Proportion of particles with R smaller than 1 µm/% | 1.45 | 1.37 | 0.82 | 0.81 | 1.25 | 2.38 |
| Xₚₑₐₖ/Å | 11443 | 15354 | 16727 | 11523 | 9135 | 11235 |
| Yₚₑₐₖ/Å | 1455 | 1593 | 1510 | 1523 | 1512 | 1435 |
| Xₚₑₐₖ/Yₚₑₐₖ | 7.9 | 9.6 | 11.1 | 7.6 | 6.0 | 7.8 |
| X₁₀/Å | 7629 | 11042 | 11981 | 7412 | 6212 | 9238 |
| X₅₀/Å | 16253 | 17353 | 18875 | 18025 | 16235 | 14086 |
| X₉₀/Å | 34662 | 27344 | 29499 | 37054 | 38812 | 28842 |
| K90 | 1.66 | 0.94 | 0.93 | 1.64 | 2.01 | 1.39 |
| Microscopic stress | 0.068 | 0.063 | 0.067 | 0.072 | 0.085 | 0.074 |
| First specific discharge capacity (0.1 C/mAh/g) | 203.3 | 203.4 | 203.5 | 202.8 | 201.9 | 203.1 |
| Specific discharge capacity (1.0 C/mAh/g) | 185 | 187.3 | 187.6 | 186.7 | 185.2 | 187.1 |
| 1.0 C/0.1 C | 91.0 | 92.1 | 92.2 | 92.1 | 91.7 | 92.1 |
| Capacity retention rate after 80 cycles at 45°C/% | 94.1 | 95.7 | 96.2 | 94.8 | 94.6 | 94.3 |

| | Example 7 | Example 8 | Example 9 | Comparative Example 1 | Comparative Example 2 | |
|---|---|---|---|---|---|---|
| Average particle size P50/µm | 7.2 | 5.4 | 3.5 | 1.8 | 4.2 | |
| Proportion of particles with R smaller than 1 µm/% | 4.27 | 2.35 | 0.79 | 15.60 | 0.35 | |
| Xₚₑₐₖ/Å | 17125 | 16735 | 16857 | 4439 | 8700 | |
| Yₚₑₐₖ/Å | 1427 | 1522 | 1520 | 1393 | 1522 | |
| Xₚₑₐₖ/Yₚₑₐₖ | 12.0 | 11.0 | 11.1 | 3.2 | 5.7 | |
| X₁₀/Å | 10712 | 11523 | 12053 | 2960 | 6100 | |
| X₅₀/Å | 19359 | 18327 | 19013 | 10148 | 11701 | |
| X₉₀/Å | 31732 | 30235 | 30125 | 32347 | 32502 | |
| K90 | 1.09 | 1.02 | 0.95 | 2.90 | 2.26 | |
| microscopic stress | 0.078 | 0.073 | 0.062 | 0.092 | 1.01 | |
| First specific discharge capacity (0.1C/mAh/g) | 200.5 | 201.5 | 220.5 | 198.1 | 185.2 | |
| Specific discharge capacity (1.0C/mAh/g) | 183.2 | 185.2 | 200.6 | 179.2 | 160.1 | |
| 1.0C/0.1C | 91.4 | 91.9 | 91.0 | 90.5 | 86.4 | |
| Capacity retention rate after 80 cycles at 45°C/% | 95.8 | 95.5 | 90.2 | 93.5 | 95.2 | |

The above test result reveals that: in Example 1 to Example 3, the particle size of the cathode material increased sequentially. A large particle size was beneficial for increasing cycles. However, since Li ions needed a longer path to reach the surface, the rate capability generally decreased as the particle size increases. Due to an increase in the sub-grain size of the 003 crystallographic plane, the rate capability of the cathode material did not decrease; on the contrary, the rate capability of the cathode material was improved.

In Example 4, T2 was relatively low, t3 was relatively small, an effect of internal structure optimization was relatively weak, and the K90 of the cathode material was relatively large. The capacity, the rate capability, and the cycling performance in Example 4 were slightly worse than those in Example 3.

In Example 5, T2 was relatively high and the same as T1, t3 was relatively large, an effect of structure optimization was relatively weak, the cathode material had a relatively small Xₚₑₐₖ, Xₚₑₐₖ/Yₚₑₐₖ was relatively small, K90 was relatively large, and a lattice distortion was relatively large. Both the rate capacity and the cycling performance in Example 5 were relatively worse than those in Example 3.

In Example 6, T1 was relatively low, t2 was relatively small, and the obtained single-crystal particle size was relatively small. Thus, the cycling performance of the cathode material was relatively unsatisfactory.

In Example 7, T1 was relatively high, t2 was relatively large, and the obtained single-crystal particle size was relatively large, which was relatively unfavorable for the deintercalation of the lithium ions. Thus, the capacity and the rate capability of the cathode material were slightly unsatisfactory.

In Example 8, T1 was relatively high, t2 was relatively large, and the obtained single-crystal particle size was slightly large, which was relatively unfavorable for the deintercalation of the lithium ions. Thus, the capacity and the rate capability of the cathode material were slightly unsatisfactory.

In Comparative Example 1, there was no T2 cooling stage, Xₚₑₐₖ/Yₚₑₐₖ was relatively small, and T1 was relatively low. The particle size of the cathode material was small. Thus, the cycling performance of the cathode material was unsatisfactory, the microscopic stress was large, and the rate capability of the cathode material was also relatively unsatisfactory.

In Comparative Example 2, there was no T2 cooling stage, and the particle size of the cathode material was relatively large. The excessively large particle size caused the internal stress of the cathode material to be unable to be released, and thus the stress was large. The sub-grain size of the 003 crystallographic plane of the cathode material was small. Xₚₑₐₖ/Yₚₑₐₖ was relatively small. Thus, the rate capability was relatively unsatisfactory.

In the description of the present disclosure, it should be understood that, terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "plurality" means at least two, unless otherwise specifically defined.

Reference throughout this specification to "an embodiment", "some embodiments", "an example", "a specific example", or "some examples" means that a particular feature, structure, material, or characteristic described in connection with the embodiment or example is included in at least one embodiment or example of the present disclosure. The appearances of the above phrases in various places throughout this specification are not necessarily referring to the same embodiment or example. Further, the particular features, structures, materials, or characteristics may be combined in any suitable manner in one or more embodiments or examples. In addition, different embodiments or examples and features of different embodiments or examples described in the specification may be combined by those skilled in the art without mutual contradiction.

Although the embodiments of the present disclosure have been shown and described above, it should be understood that the above-mentioned embodiments are exemplary and should not be construed as limiting the present disclosure. Those skilled in the art can make changes, modifications, substitutions, and alternations to the above-mentioned embodiments within the scope of the present disclosure.

## Claims

1. A cathode material, comprising a composition represented by Formula (1):
Li*ₐ*Ni*ₓ*Mn*_{y}*Co*_{z}*M_{1*b*}M_{2*c*}O₂ Formula (1),
where:
0.9≤*a*≤1.1, 0.5≤*x*<1, 0<*y*<0.5, 0<*z*<0.5, 0≤*b*≤0.03, and 0≤c≤0.05; and
M₁ and M₂ each independently comprise at least one of Ba, Ra, Zr, Fe, Ca, Zn, B, W, Nb, Cd, Pb, Si, Mo, Cu, V, Ta, Cr, La, Al, Ce, Er, Ho, Y, Mg, Sr, or Ti,
wherein a peak sub-grain size Xₚₑₐₖ of a 003 crystallographic plane of the cathode material and a peak sub-grain size Yₚₑₐₖ of a 104 crystallographic plane of the cathode material satisfy: 6≤Xₚₑₐₖ/Yₚₑₐₖ≤20, where:
the peak sub-grain size Xₚₑₐₖ refers to a sub-grain size corresponding to a peak of a sub-grain size volume distribution view of the 003 crystallographic plane, the sub-grain size volume distribution view of the 003 crystallographic plane being obtained from a powder X-ray diffraction pattern of the cathode material measured using Cu Kα radiation and calculated by Whole Powder Pattern Fitting (WPPF) refinement;
the peak sub-grain size Yₚₑₐₖ refers a sub-grain size corresponding to a peak of a sub-grain size volume distribution view of the 104 crystallographic plane, the sub-grain size volume distribution view of the 104 crystallographic plane being obtained from the powder X-ray diffraction pattern of the cathode material measured using Cu Kα radiation and calculated by the WPPF refinement.

2. The cathode material according to claim 1, wherein 7≤Xₚₑₐₖ/Yₚₑₐₖ≤15.

3. The cathode material according to claim 1 or 2, wherein Xₚₑₐₖ≥10,000 Å.

4. The cathode material according to any one of claims 1 to 3, wherein 10,000 Å≤Xₚₑₐₖ≤20,000 Å.

5. The cathode material according to any one of claims 1 to 4, wherein a sub-grain size distribution K90 of the 003 crystallographic plane of the cathode material satisfies: 0.4≤K90≤2.0, where K90=(X₉₀-X₁₀)/X₅₀,
wherein X₁₀, X₅₀, and X₉₀ refer to sub-grain sizes corresponding to sub-grain size distribution percentages of 10%, 50%, and 90% in the sub-grain size volume distribution view of the 003 crystallographic plane, respectively, the sub-grain size volume distribution view of the 003 crystallographic plane being obtained from the powder X-ray diffraction pattern of the cathode material measured using Cu Kα radiation and calculated by the WPPF refinement.

6. The cathode material according to claim 5, wherein 0.5≤K90≤1.4.

7. The cathode material according to any one of claims 1 to 6, wherein the cathode material has an average particle size P50 ranging from 2.5 µm to 6.0 µm, wherein the average particle size P50 is an average of caliper diameters R of 500 particles of the cathode material that are randomly selected from a scanning electron microscopy image of the cathode material, the caliper diameter R being defined as an average of a length and a width of the minimum bounding rectangle of each particle of the cathode material.

8. The cathode material according to claim 7, wherein P50 ranges from 3.0 µm to 4.0 µm.

9. The cathode material according to any one of claims 1 to 8, wherein in the cathode material, a proportion of particles with a caliper diameter R smaller than 1 µm is less than or equal to 3%, the caliper diameter R being defined as an average of a length and a width of the minimum bounding rectangle of each particle of the cathode material.

10. The cathode material according to claim 9, wherein in the cathode material, the proportion of the particles with the caliper diameter R smaller than 1 µm is less than or equal to 2%.

11. The cathode material according to any one of claims 1 to 10, wherein the cathode material has a microscopic stress smaller than or equal to 0.08%, the microscopic stress being a percentage of lattice distortion of the entire sub-grain obtained from the powder X-ray diffraction pattern of the cathode material calculated by the WPPF refinement.

12. The cathode material according to any one of claims 1 to 11, wherein:
M₁ comprises at least one of Zr, Ca, Zn, B, W, Nb, Mo, La, Al, Ce, Mg, Sr, or Ti, and/or
M₂ comprises at least one of Zr, Ca, Zn, W, Nb, Cd, Pb, Si, Mo, Cr, La, Al, Ce, Er, Ho, Y, Mg, Sr, or Ti.

13. A method for preparing the cathode material according to any one of claims 1 to 12, the method comprising:
mixing a precursor with a first lithium source, a second lithium source, and an optional M₁ source, to obtain a first mixture;
performing a first sintering on the first mixture, to obtain an intermediate product;
mixing the intermediate product with an optional M₂ source, to obtain a second mixture; and
performing a second sintering on the second mixture, to obtain the cathode material,
wherein the first sintering comprises: heating the first mixture to a temperature T1 within a duration t1 and holding for a duration t2; and then cooling down the first mixture to a temperature T2 and holding for a duration t3.

14. The method according to claim 13, wherein the precursor is a nickel-cobalt-manganese ternary precursor.

15. The method according to claim 14, wherein the nickel-cobalt-manganese ternary precursor has a BET specific surface area greater than or equal to 20 m²/g.

16. The method according to any one of claims 13 to 15, satisfying at least one of the following conditions:
the first lithium source comprises at least one of lithium carbonate or lithium oxide;
in terms of molar ratio, an addition amount of the first lithium source satisfies 0.5≤[n(Li¹)]/[n(M')]≤1.0, where: n(Li¹) represents an amount of element lithium in the first lithium source; and n(M') represents a total amount of all metallic elements in the precursor;
the second lithium source comprises at least one of lithium hydroxide, lithium oxalate, or lithium acetate; or
in terms of molar ratio, an addition amount of the second lithium source satisfies 1.0≤[n(Li¹+Li²)]/[n(M')]≤1.1, where n(Li¹+Li²) represents a total amount of element lithium in the first lithium source and the second lithium source.

17. The method according to claim 16, satisfying at least one of the following conditions: $0.65 \leq \left[n\left({Li}^{1}\right)\right] / \left[n\left(M′\right)\right] \leq 0.9 ;$ or $1.01 \leq \left[n\left({Li}^{1}+{Li}^{2}\right)\right] / \left[n\left(M′\right)\right] \leq 1.06 .$

18. The method according to any one of claims 13 to 17, wherein the M₁ source and the M₂ source satisfy at least one of the following conditions:
the M₁ source comprises at least one of carbonates, hydroxides, oxides, or acetates of Zr, Ca, Zn, B, W, Nb, Mo, La, Al, Ce, Mg, Sr, and Ti;
in terms of molar ratio, an addition amount of the M₁ source satisfies 0.0001≤[n(M₁)]/[n(M')]≤0.03, where: n(M₁) represents an amount of element M₁ in the M₁ source; and n(M') represents a total amount of all metallic elements in the precursor;
the M₂ source comprises at least one of carbonates, hydroxides, oxides, or acetates of Zr, Ca, Zn, W, Nb, Cd, Pb, Si, Mo, Cr, La, Al, Ce, Er, Ho, Y, Mg, Sr, and Ti; or
in terms of molar ratio, an addition amount of the M₂ source satisfies 0<[n(M₂)]/[n(M')]≤0.05, where: n(M₂) represents an amount of element M₂ in the M₂ source.

19. The method according to claim 18, wherein the M₁ source and the M₂ source satisfy at least one of the following conditions: $0.001 \leq \left[n\left({M}_{1}\right)\right] / \left[n\left(M′\right)\right] \leq 0.01 ;$ $0.001 \leq \left[n\left({M}_{2}\right)\right] / \left[n\left(M′\right)\right] \leq 0.03 .$

20. The method according to any one of claims 13 to 19, wherein the first sintering and the second sintering satisfy at least one of the following conditions:
t1 ranges from 1 hour to 6 hours;
T1 ranges from 900°C to 1,300°C;
t2 ranges from 5 hours to 10 hours;
T2 ranges from 700°C to 1,270°C;
t3 ranges from 2 hours to 8 hours; $T 2 < T 1 ;$
a sintering atmosphere of the first sintering is air or oxygen;
a temperature of the second sintering ranges from 250°C to 1,270°C;
a duration of the second sintering ranges from 5 hours to 20 hours; or
a sintering atmosphere of the second sintering is air or oxygen.

21. A battery, comprising the cathode material according to any one of claims 1 to 12.

22. An electrical device, comprising the battery according to claim 21.
